Europäisches Patentamt

European Patent Office

Office européen des brevets

(11) Veröffentlichungsnummer: **0 322 051**

**A2**

## (12) EUROPÄISCHE PATENTANMELDUNG

(21) Anmeldenummer: **88202916.8**

(51) Int. Cl.⁴: **G02B 6/38**

(22) Anmeldetag: **16.12.88**

(30) Priorität: **22.12.87 DE 3743483**

(43) Veröffentlichungstag der Anmeldung:
**28.06.89 Patentblatt 89/26**

(84) Benannte Vertragsstaaten:
**CH DE FR GB IT LI**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **CH FR GB IT LI**

(72) Erfinder: **Lohmüller, Detlev**
**Rilkestrasse 90**
**D-5300 Bonn 3(DE)**
Erfinder: **Romig, Hartmut**
**Riedener Kirchenweg 10**
**D-8503 Altdorf(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Lichtwellenleiter-Steckverbindung mit zugeordneten Schutzkappen.**

(57) Die Erfindung betrifft eine Lichtwellenleiter-Steckverbindung mit zugeordneten Schutzkappen, welche auf voneinander gelöste korrespondierende Steckelemente aufsetzbar und bei gekuppelten Steckelementen an einem Steckelement derart gehalten sind, daß ihr Kappenraum abgedeckt ist. Die Zuordnung der Schutzkappen zu den Steckelementen wird dadurch vereinfacht, daß zumindest eine der Schutzkappen (7,8,9,10) durch ein Formschlußelement an einem mit einem Steckelement (2,3,4,5) verbundenen Bauteil (1,17) gehalten ist.

Fig. 1

## Lichtwellenleiter-Steckverbindung mit zugeordneten Schutzkappen

Die Erfindung bezieht sich auf eine Lichtwellenleiter-Steckverbindung mit zugeordneten Schutzkappen, welche auf voneinander gelöste korrespondierende Steckelemente aufsetzbar und bei gekuppelten Steckelementen an einem Steckelement derart gehalten sind, daß ihr Kappenraum abgedeckt ist.

Bei einer nach PKI-Tech. Mitt. 2/1987, Seite 97 bekannten Steckverbindung dieser Art ist zwei zu kuppelnden Steckelementen je eine Schutzkappe zugeordnet, durch welche die empfindlichen offenen Bereiche nicht gekuppelter Steckelemente abgedeckt und derart gegen Staub und Berührung geschützt werden können. Mit jedem Steckelement ist eine zugeordnete Schutzkappe über ein Halteband verbunden.

Bei gekuppelter Steckverbindung müssen auch die Kappenräume der Schutzkappen gegen Verschmutzen geschützt sein, da in diese eingedrungener Schmutz oder Staub in die Kupplungsbereiche der Steckelemente übertragen werden könnte. Deshalb sind beide Schutzkappen derart aneinander geschraubt, daß ihre Kappenräume sich gegenseitig schließen, so daß kein Staub eindringen kann.

Der Erfindung liegt die Aufgabe zugrunde, die Zuordnung von Steckelementen und Schutzkappen zu vereinfachen.

Die Lösung gelingt dadurch, daß zumindest eine der Schutzkappen durch ein Formschlußelement an einem mit einem Steckelement verbundenen Bauteil gehalten ist.

Die Schutzkappe ist auf einfache Weise fest und sicher nahe am Steckelement gehalten. Sie kann bei Beschädigung leicht ausgewechselt werden. Ferner ist die Schutzkappe dem Steckelement eng und raumsparend zugeordnet. Bewegliche hängende Teile sind vermieden. Am Steckelement selbst brauchen keine aufwendigen Halteeinrichtungen vorgesehen zu sein. Die Schutzkappen berühren nicht die optischen Bauteile der Steckverbinder.

Die Formschlußelemente können als Gewinde, Rastelemente oder Bajonettverschlußelemente ausgebildet sein.

Bei Schutzkappen, die wie im bekannten Fall hinsichtlich ihrer Anschlußabmessungen analog einem Gegensteckelement gestaltet sind, können diese Anschlußabmessungen in Form eines Gewindes oder eines Bajonettverschlusses gleichzeitig als Formschlußelemente zur Halterung der Schutzkappen an einem mit einem Steckelement verbundenen Bauteil genutzt werden.

Ein Formschlußelement der Schutzkappe kann gemäß einer vorteilhaften Weiterbildung der Erfindung an einem Haltekörper angreifen, welcher wiederum an einem zum Steckelement ortsfesten Bauelement befestigt ist. Ein solcher Haltekörper kann vorteilhaft mit Rastarmen an beliebiger Stelle auf eine zum Steckerelement führende optische Leitung aufgesetzt sein.

Wie im bekannten Fall können zu korrespondierenden Steckelementen gehörende Schutzkappen miteinander zur gegenseitigen Abdeckung ihrer Kappenräume verbunden sein. In diesem Falle braucht nur eine der Schutzkappen über einen Haltekörper befestigt zu werden. Es ist vorteilhaft, daß die Schutzkappen derart auf die Steckelemente aufsetzbar sind, daß ihre Innenwandungen die eine optische Leitfunktion ausübenden Bauteile mit Abstand umgeben.

Die Erfindung und ihre Vorteile werden anhand der Beschreibung von in der Zeichnung dargestellten vorteilhaften Ausführungsbeispielen näher erläutert.

Fig. 1 zeigt als Explosionszeichnung eine erfindungsgemäße Anordnung, bei welcher zwei Steckelemente über einen Zwischenstecker verbindbar sind.

Fig. 2 zeigt zwei aneinander geschraubte Schutzkappen nach Fig. 1.

Fig. 3 zeigt in vergrößerter Darstellung einen Haltekörper nach Fig. 1.

Fig. 4 zeigt eine alternative Gestaltung eines Haltekörpers.

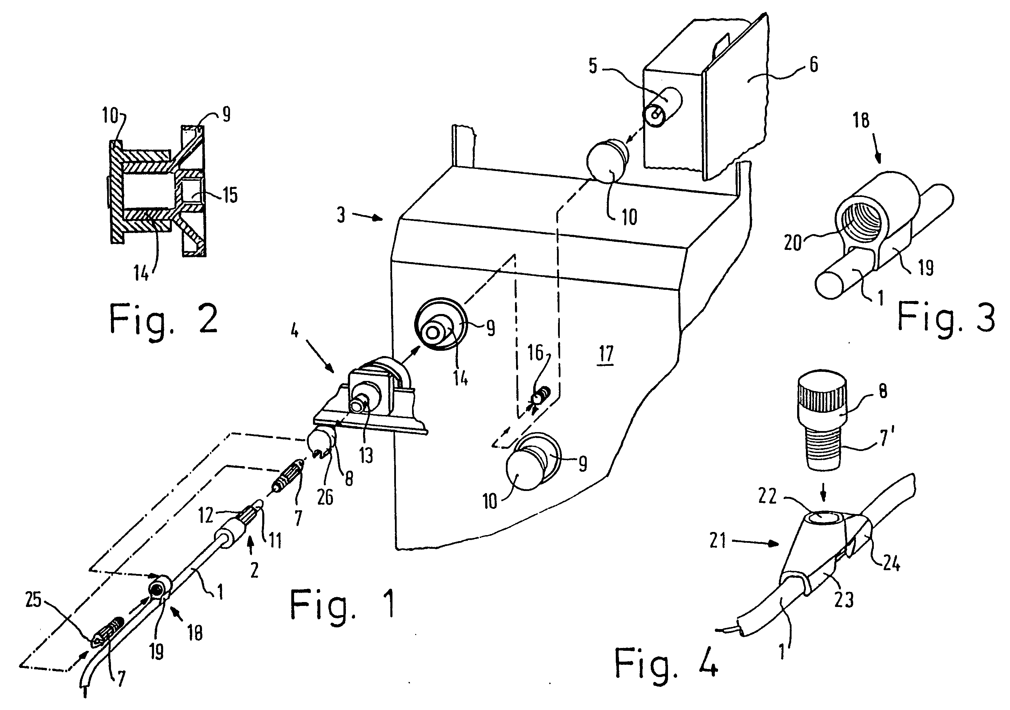

Gemäß Fig. 1 ist ein umhüllter Lichtwellenleiter 1 mit seinem Steckelement 2 über einen an einem Einschubgehäuse 3 zu befestigenden Zwischenstecker 4 mit einem Steckelement 5 eines Geräts 6 optisch leitend zu verbinden. Zur Abdeckung der Kupplungsbereiche der Steckelemente 2 und 5 sowie des Zwischensteckers 4 sind vier Schutzkappen 7 bis 10 vorgesehen.

Die Schutzkappe 7 nimmt mit ihrem rückwärtig geschlossenen Hohlraum den Steckerstift 11 des Steckelements 2 auf, dessen Überwurfmutter 12 mit ihrem Innengewinde auf das Außengewinde der Schutzkappe 7 schraubbar ist.

Die topfförmige Schutzkappe 8 paßt mit ihrem Innengewinde auf das Außengewinde des Kupplungsbereichs 13 des Zwischensteckers 4 und auch auf das Außengewinde der Schutzkappe 7.

Die rückwärtig geschlossene Schutzkappe 9 ist mit einem Innengewinde auf ein Außengewinde einer nicht erkennbaren Hülse des Zwischensteckers 4 aufschraubbar. Die topfartige Schutzkappe 10 ist mit ihrer glatten zylindrischen Innenfläche auf die Außenfläche des Steckelements 5 stramm aufschiebbar. Die Schutzkappen 9 und 10 sind auch ineinander schiebbar (Fig. 2), da der Außendurchmesser des Ansatzes 14 der Schutzkappe 10 dem Außendurchmesser des Steckelements 5 gleich ist.

Die Schutzkappe 9 ist mit einer Gewindebohrung 15 auf den Gewindedorn 16 einer Wandung 17 des Einschubgehäuses 13 schraubbar. Dort sind beide Schutzkappen 9 und 10 bei Nichtbenutzung sicher und staubgeschützt geparkt.

Die Schutzkappe 7 kann mit ihrem Außengewinde durch eine Innengewindebohrung 20 eines Haltekörpers 18 geschraubt werden, welcher mit Rastarmen 19 (vgl. Fig. 3) an den umhüllten Lichtwellenleiter 1 geklammert ist. Auf den hindurchragenden Endabschnitt des Gewindebereichs der Schutzkappe 7 ist die Schutzkappe 8 mit ihrem Innengewinde schraubbar, so daß dann auch diese Schutzkappen sicher und staubgeschützt in unmittelbarer Nähe des Steckelements 2 gehalten sind.

Alternativ könnte die Schutzkappe 8 mitsamt der darin eingeschraubten Schutzkappe 7 mittels ihrer Rastarme 26 direkt an den Lichtwellenleiter 1 geklammert werden, ohne daß dann ein besonderer Haltekörper 18 benötigt wird.

Der alternativ gestaltete Haltekörper 21 nach Fig. 4 weist eine im wesentlichen senkrecht zur Richtung des LWL 1 verlaufende Gewindebohrung 22 auf und ist mittels der Haltearme 23 und 24 an den Lichtwellenleiter 1 geklammert. In die Gewindebohrung 22 ist das geschlossene Ende einer Schutzkappe 7′ schraubbar, auf deren verbleibendem Gewindeabschnitt von der offenen Seite her eine Schutzkappe 8 aufschraubbar ist.

Die Schutzkappe 7′ nach Fig. 4 weist im Gegensatz zur Schutzkappe 7 nach Fig. 1 keine Ziehöse 25 zum Eingriff eines Ziehdrahtes auf.

**Ansprüche**

1. Lichtwellenleiter-Steckverbindung mit zugeordneten Schutzkappen, welche auf voneinander gelöste korrespondierende Steckelemente aufsetzbar und bei gekuppelten Steckelementen an einem Steckelement derart gehalten sind, daß ihr Kappenraum abgedeckt ist,
dadurch gekennzeichnet, daß zumindest eine der Schutzkappen (7,8,9,10) durch ein Formschlußelement an einem mit einem Steckelement (2,3,4,5) verbundenen Bauteil (1,17) gehalten ist.

2. Anordnung nach Anspruch 1,
dadurch gekennzeichnet, daß das Formschlußelement ein Gewinde (20) ist.

3. Anordnung nach Anspruch 1,
dadurch gekennzeichnet, daß das Formschlußelement ein Rastelement (26) ist.

4. Anordnung nach Anspruch 1,
dadurch gekennzeichnet, daß das Formschlußelement ein Bajonettverschlußelement ist.

5. Anordnung nach einem der Ansprüche 1 bis 4,
dadurch gekennzeichnet, daß das Formschlußelement analog einem Gegensteckerelement gestaltet ist.

6. Anordnung nach einem der Ansprüche 1 bis 5,
dadurch gekennzeichnet, daß das Formschlußelement an einen Haltekörper (16,18) angreift, welcher am zum Steckerelement ortsfesten Bauelement (1) befestigt ist.

7. Anordnung nach Anspruch 6,
dadurch gekennzeichnet, daß der Haltekörper ein Gewindedorn (16) ist.

8. Anordnung nach Anspruch 6,
dadurch gekennzeichnet, daß der Haltekörper (18) mit Rastarmen (19) auf die zum Steckerelement (2) führende optische Leitung (1) aufgesetzt ist.

9. Anordnung nach einem der Ansprüche 1 bis 8,
dadurch gekennzeichnet, daß eine einem zweiten Steckerelement (13,15) zugeordnete Schutzkappe (8,10) an der dem ersten Steckerelement (2,4) zugeordnete und am ortsfesten Bauteil (1,17) gehaltenen Schutzkappe (7,9) befestigt ist.

10. Anordnung nach einem der Ansprüche 1 bis 9,
dadurch gekennzeichnet, daß die Schutzkappen derart auf die Steckelemente aufsetzbar sind, daß ihre Innenwandungen die eine optische Leitfunktion ausübenden Bauteile mit Abstand umgeben.

EP 0 322 051 A2

Fig. 2

10   9

15

14

Fig. 1

4

9

14

13

16   17

9

10

8

26

7

12

11

2

1

25

19   18

7

Fig. 3

18

20   19

1

Fig. 4

8

7'

22

21   24

23

1

3

5   6

10

10